# EUROPEAN PATENT SPECIFICATION

(11) **EP 1 849 848 B1**
(45) Date of publication and mention of the grant of the patent: **06.04.2011**
(21) Application number: 07251739.4
(22) Date of filing: 25.04.2007
(51) Int. Cl.: C09K 11/59, C09K 11/64, C09K 11/78, C09K 11/79, C09K 11/83

(54) **Phosphor for plasma display panel and plasma display panel including the same**
Phosphor für eine Plasmaanzeigetafel und Plasmaanzeigetafel damit
Phosphore pour panneau d'affichage à plasma et panneau d'affichage à plasma le comprenant

(30) Priority: 26.04.2006 KR 20060037715
(43) Date of publication of application: 31.10.2007
(73) Proprietor: Samsung SDI Co., Ltd., Suwon-si, Gyeonggi-do (KR)
(72) Inventor: Choi, Ick-Kyu, c/o Samsung SDI Co. Ltd., Suwon-si, Gyeonggi-do (KR); You, Young-Chul, c/o Samsung SDI Co. Ltd., Suwon-si, Gyeonggi-do (KR); Lee, Andrew, c/o Samsung SDI Co. Ltd., Suwon-si, Gyeonggi-do (KR); Zang, Dong-Sik, c/o Samsung SDI Co. Ltd., Suwon-si, Gyeonggi-do (KR); Kim, Ji-Hyun, c/o Samsung SDI Co. Ltd., Suwon-si, Gyeonggi-do (KR); Park, Kyu-Chan, c/o Y.P.Lee, Mock & Partners, Seocho-Gu, Seoul (KR); Song, Mi-Ran, c/o Samsung SDI Co. Ltd., Suwon-si, Gyeonggi-do (KR); Song, Yu-Mi, c/o Samsung SDI Co. Ltd., Suwon-si, Gyeonggi-do (KR); Heo, Gyeong-Jae, c/o Samsung SDI Co. Ltd., Suwon-si, Gyeonggi-do (KR)
(74) Representative: Mounteney, Simon James

(56) References cited:
- EP-A- 1 619 231
- WO-A-2004/087832
- US-A1- 2002 039 665
- G.Y. HONG ET.AL.: "Improvement of discharge characteristics of the Zn2SiO4:Mn2+ phosphor layer in plasma display panels" JOURNAL OF THE ELECTROCHEMICAL SOCIETY, vol. 151, no. 10, 2004, pages H205-H209, XP002447331

## Description

### BACKGROUND OF THE INVENTION

### 1. Field of the Invention

The present invention relates to a phosphor and a plasma display panel (PDP) including the same. In particular, the present invention relates to a phosphor having improved display properties and lifespan.

### 2. Description of the Related Art

In general, phosphors refer to materials capable of emitting light upon exposure to energy. In particular, conventional phosphors may absorb light, reach an excitation state, and emit light at a predetermined wavelength. Phosphors may exhibit current saturation properties, deterioration properties, luminance properties, and predetermined color purity. Accordingly, phosphors may be used in a variety of light sources, e.g., mercury fluorescent lamps, mercury-free fluorescent lamps, electron emission devices, plasma display panels (PDPs), and so forth.

In a conventional PDP, a phosphor layer may be employed and subjected to vacuum ultraviolet (VUV) light, e.g., a wavelength of about 147 nm to about 200 nm triggered by, e.g., xenon (Xe) gas. The VUV light may excite the phosphor layer to emit light with a predetermined luminance.

The conventional phosphor may, *inter alia,* emit green light, e.g., Zn₂SiO₄:Mn or a mixture of ZnSiO₄:Mn, YBO₃:Tb, and (Ba, Sr)MgAl₁₀O₁₉:Mn. The conventional use of Zn₂SiO₄:Mn in phosphor may provide good luminance, color coordinates and lifespan as compared to other green phosphors, e.g., BaAl₁₂O₁₉:Mn or YBO₃:Tb. However, the surface of the Zn₂SiO₄:Mn phosphor may have a high negative polarity and, thereby, require a high discharge voltage. The high discharge voltage may trigger increased ion emission and, thereby, cause phosphor deterioration. An attempt has been made to combine the Zn₂SiO₄:Mn phosphor with other green phosphors in order to decrease the discharge voltage. However, the phosphor mixture exhibited decreased display properties.

Accordingly, there exists a need for a phosphor having an enhanced lifespan, while maintaining good luminance and color coordinates.

EP 1 383 153 discloses a method of manufacturing a plasma display device, in which at least one of the phosphor layers has a green phosphor layer containing green phosphor with a crystal structure Zn₂SiO₄:Mn.

WO 2004/087832 discloses a phosphor for a plasma display panel that is formed by coating a metallic oxide onto a surface of a green phosphor Zn₂SiO₄:Mn.

### SUMMARY OF THE INVENTION

The present invention is therefore directed to a phosphor and a plasma display panel (PDP), which sets out to substantially overcome one or more of the disadvantages of the related art.

It is therefore an object of the present invention to provide a phosphor having an enhanced lifespan and good luminance and color coordinates.

It is another object of the present invention to provide a PDP with a phosphor having an enhanced lifespan, while maintaining good luminance and color coordinates.

According to a first aspect of the invention there is provided a phosphor with an amorphous layer as set out in claim 1. Preferred features are set out in claims 2 to 5.

According to another aspect of the present invention, there is provided a method of forming a phosphor with an amorphous layer as set out in claim 6.

In yet another aspect of the present invention, there is provided a PDP as set out in claim 7.

### BRIEF DESCRIPTION OF THE DRAWINGS

The above and other features and advantages of the present invention will become more apparent to those of ordinary skill in the art by describing in detail embodiments thereof with reference to the attached drawings, in which:
FIG. 1 illustrates a perspective view of a plasma display panel (PDP) according to an embodiment of the present invention;
FIG. 2 illustrates a transmission electron microscope (TEM) image of an aluminum oxide layer on a surface of a phosphor ;
FIG. 3 illustrates an enlarged image of FIG. 2;
FIG. 4 illustrates a graph of energy dispersive spectroscope (EDS) data of a phosphor with an aluminum oxide layer ;
FIG. 5 illustrates a TEM image of a lanthanum oxide layer on a surface of a phosphor according to an embodiment of the present invention;
FIG. 6 illustrates an enlarged image of FIG. 5;
FIG. 7 illustrates a graph of EDS data of a phosphor with a lanthanum oxide layer according to an embodiment of the present invention;
FIG. 8 illustrates a TEM image of a yttrium oxide layer on a surface of a phosphor;
FIG. 9 illustrates an enlarged image of FIG. 8;
FIG. 10 illustrates a graph of EDS data of a phosphor with a yttrium oxide layer ; and
FIG. 11 illustrates a graph of luminance retention in PDPs having phosphor layers according to an embodiment of the present invention as compared to a conventional PDP.

### DETAILED DESCRIPTION OF THE INVENTION

The present invention will now be described more fully hereinafter with reference to the accompanying drawings, in which embodiments of the invention are illustrated. The invention may, however, be embodied in different forms and should not be construed as limited to the embodiments set forth herein. Rather, these embodiments are provided so that this disclosure will be thorough and complete, and will fully convey the scope of the invention to those skilled in the art.

In the figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

An embodiment of a phosphor with an amorphous layer according to the present invention will now be described in detail below. The phosphor with an amorphous layer according to an embodiment of the present invention may include a core phosphor and an amorphous oxide layer having a positive polarity. In particular, the core phosphor includes a Mn-activated zinc silicate represented by Zn₂SiO₄:Mn, and the amorphous oxide layer includes the metal oxide lanthanum oxide (La₂O₃) adsorbed into a surface of the core phosphor to form a phosphor with an amorphous layer having improved discharge properties, resistance to plasma impact and lifespan as compared to the core phosphor.

The amorphous oxide layer is formed on the core phosphor to a thickness of about 1 nm to about 30 nm, so that an amount of the metal oxide adsorbed into the core phosphor may be controlled to form a phosphor with an amorphous layer having a predetermined zeta potential. The amount of metal oxide adsorbed into the core phosphor is in the range of about 0.01-10 parts by weight, and preferably about 0.03-2.0 parts by weight, based on 100 parts by weight of the core phosphor. An amount of metal oxide below about 0.01 parts by weight based on 100 parts by weight of the core phosphor is insufficient to modify a surface polarity of the core phosphor, thereby providing no decrease in discharge voltage. On the other hand, an amount of metal oxide in excess of about 10 parts by weight based on 100 parts by weight of the core phosphor absorbs vacuum ultraviolet (VUV) light and/or visible light generated by the core phosphor and, thereby, decrease the luminance of the core phosphor.

Without intending to be bound by theory, it is believed that a metal oxide has a positive charge and, therefore, can reduce the overall surface polarity of a negatively polarized core phosphor upon adsorption thereto. Accordingly, the discharge voltage of the phosphor with an amorphous layer, i.e., a core phosphor adsorbed with an amorphous oxide layer, may be reduced. In addition, it is believed that a metal oxide has a reduced reactivity as compared to the core phosphor and, thereby, provide a shield capable of minimizing contact between the core phosphor and emitted ions during sputtering to reduce deterioration of the phosphor with an amorphous layer.

The phosphor with the amorphous layer according to an embodiment of the present invention may be used as a single phosphor component or as a main component in a mixture of phosphors, e.g., YBO₃:Tb, BaAl₁₂O₁₉:Mn, and so forth. However, when the phosphor with the amorphous layer is used in a mixture of phosphors, the other phosphors may be used in small amounts in order to improve the light properties of the PDP.

A zeta potential of the phosphor with the amorphous layer may be in the range of about 10 mV to about 50 mV, and preferably about 20 mV to about 40 mV. An average diameter of a particle of the phosphor with the amorphous layer may be in the range of about 1 *µ*m to about 10 *µ*m.

According to yet another embodiment of the present invention, a method of preparing a phosphor with an amorphous layer will now be described in detail.

In the method according to an embodiment of the present invention, a core phosphor is synthesized in a reduction atmosphere at a high temperature to facilitate adsorption of materials having positive surface charges into a surface of the core phosphor by an adsorbing method and, thereby, to impart a positive polarity to the surface of the core phosphor.

In particular, the core phosphor is synthesized from any phosphor forming components as determined by one of ordinary skill m the art by a conventional solid-state reaction, followed by a thermal treatment at a temperature in a range of about 1,000 °C to about 1,400 °C for about 10 hours or less. As a result, the core phosphor may be formed. Next, a metal oxide, e.g., aluminum oxide (Al₂O₃), lanthanum oxide (La₂O₃), or yttrium oxide (Y₂O₃), may be adsorbed onto a surface of the formed core phosphor at a predetermined ratio by an ion adsorption method to form an amorphous oxide layer thereon.

The ion adsorption method includes mixing the core phosphor with pure water at a predetermined ratio to form a first mixture, stirring the first mixture for about 30 minutes, adding a predetermined amount of an aqueous solution of a nitrate compound of an atom to be adsorbed, e.g., Al(NO₃)₃, La(NO₃)₃, or Y(NO₃)₃, to form a second mixture, and stirring the second mixture for about 30 minutes. Without intending to be bound by theory, it is believed that positive metal ions, e.g., Al³⁺, La³⁺, or Y³⁺ ions, may be easily adsorbed to a negatively charged surface of the core phosphor in the aqueous solution, i.e., the second mixture. Next, since the aqueous solution may be highly acidic, i.e., have a pH in a range of about 4 to about 5, ammonia solution (NH₃OH) may be added to the aqueous solution in an amount sufficient to impart an overall pH of about 7 to the aqueous solution. Addition of the ammonia solution to the aqueous solution may trigger interaction between the metal ions in the aqueous solution and the hydroxide group of the ammonia solution, as illustrated in reaction scheme 1, to facilitate metal ion adsorption into the surface of the core phosphor to form an intermediate phosphor.

M³⁺ + 3(OH⁻) → M (OH)₃ (Reaction Scheme 1)

The intermediate phosphor isthermally treated at a temperature in a range of about 400 °C to about 600 °C to facilitate formation of an amorphous oxide layer on the surface of the intermediate phosphor to complete formation of the phosphor with the amorphous layer. The thermal treatment may be performed in an inert gas atmosphere, i.e., in a presence of a hydrogen gas (H₂), a nitrogen gas (N₂), or a mixture thereof. If luminance of the phosphor with the amorphous layer is decreased during the thermal treatment due to oxidation, the luminance may be adjusted by a thermal treatment in a reduction atmosphere.

A thickness of the amorphous oxide layer is in the range of about 1 nm to about 30 nm. A thickness below about 1 nm may be insufficient to shield the phosphor with the amorphous layer from ion emission, thereby providing no lifespan enhancement. On the other hand, a thickness above about 30 nm, is capable of absorbing vacuum ultraviolet (VUV) light and/or visible light generated by the phosphor with the amorphous layer and, thereby, decreasing the luminance of the phosphor with the amorphous layer.

A particle diameter of the phosphor with the amorphous layer prepared according to an embodiment of the present invention may have an average diameter of about 1 µm to about 10 µm. An average particle diameter below about 1 µm provides insufficient luminance and trigger particle agglomeration. On the other hand, an average particle diameter above about 10 µm impedes screen printing of the phosphor with the amorphous layer during application onto PDP emission cells and, thereby, reducing the fineness and precision of the PDP.

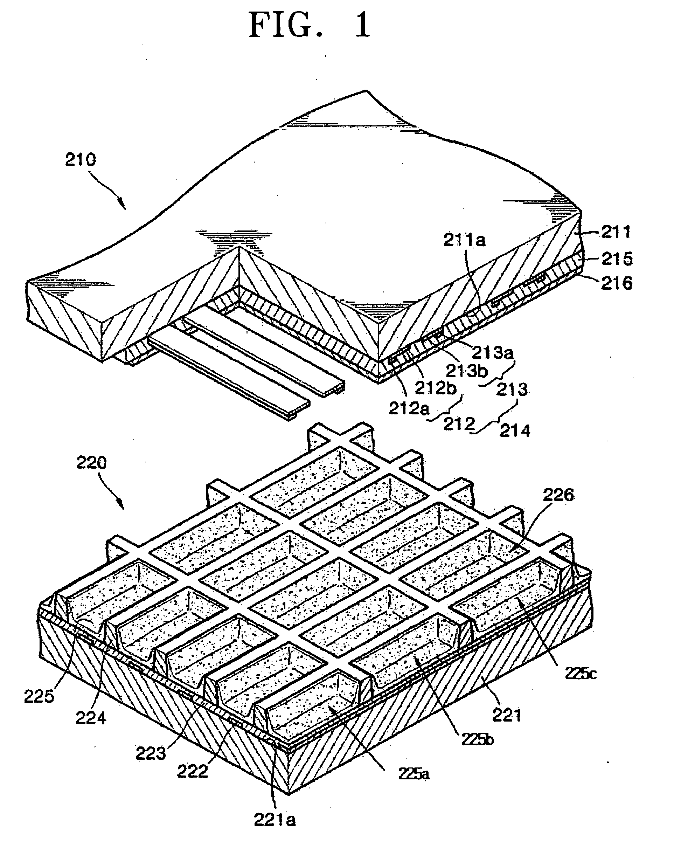

According to yet another embodiment of the present invention, a PDP having a phosphor layer will be described in detail below with respect to FIG. 1. As illustrated in FIG. 1, a PDP includes a front panel 210, a rear panel 220, and a plurality of electrodes and emission cells 226 therebetween. The emission cells 226 include a plurality of phosphor layers 225, i.e., red, green and blue phosphor layers 225a, 225b and 225c, respectively. It should be noted, however, that other PDP structures are not excluded from the scope of the present invention.

The green phosphor layers 225b are formed of the phosphor with the amorphous layer described previously. The phosphor with the amorphous layer is prepared according to an embodiment described previously. Subsequently, the phosphor with the amorphous layer is mixed with a binder and a solvent to form a paste phase composition. The paste phase composition is screen printed with a screen mesh onto the emission cells 226. Next, the screen-printed composition is dried and sintered to form a phosphor layer in the emission cells 226. The drying temperature is in the range of about 100 °C to about 150 °C. The sintering temperature is in the range of about 350 °C to about 600 °C, and preferably about 450 °C, in order to remove organic materials from the paste phase composition.

The binder employed to form the phosphor layer is ethyl cellulose, and the amount of binder is in the range of about 10 to about 30 parts by weight, based on 100 parts by weight of the phosphor with the amorphous layer. An amount of binder below about 10 parts by weight based on 100 parts by weight of the phosphor with the amorphous layer imparts insufficient binding force to the phosphor layer. On the other hand, an amount of binder above about 30 parts by weight based on 100 parts by weight of the phosphor with the amorphous layer reduces the relative amount of the phosphor with the amorphous layer and, thereby, decreasing the color purity of the emitted light.

The solvent employed to form the phosphor layer may be butyl carbitol (BCA) or terpineol, and the amount of solvent is in the range of about 70-300 parts by weight based on 100 parts by weight of the phosphor with the amorphous layer. An amount of solvent below about 70 parts by weight based on 100 parts by weight of the phosphor with the amorphous layer causes insufficient dispersion of phosphor with the amorphous layer and excessively increase a viscosity of the paste phase composition, thereby providing non-uniform luminance and trigger printing difficulties, respectively. On the other hand, an amount of solvent above about 300 parts by weight based on 100 parts by weight of the phosphor with the amorphous layer provides a low amount of phosphor with an amorphous layer per unit area, thereby decreasing the luminance of the PDP.

The viscosity of the paste phase composition is in the range of about 5,000 cps to about 50,000 cps, and preferably about 20,000 cps. When the viscosity of the paste phase composition is less than about 5,000 cps, the printing solution may leak out of the emission cells during the printing process, thereby providing non uniform printed phosphor layers in terms of thickness and location precision. On the other hand, when the viscosity of the paste phase composition is greater than about 50,000 cps, the viscosity of the paste may be too high, thereby rendering the printing difficult.

The red and blue phosphor layers 225a and 225c of the PDP may be any red and blue phosphors as determined by one of ordinary skills in the art. For example, the red phosphor may be (Y,Gd)BO₃:Eu or Y(V,P)O₄:Eu, and the blue phosphor may be BaMgAl₁₀O₁₇:Eu or CaMgSi₂O₆:Eu.

The front panel 210 of the PDP includes a transparent front substrate 211, e.g., a glass substrate, a plurality of pairs of sustain electrodes 214 disposed on a lower surface 211 a of the front substrate 211 and positioned along the emission cells 226, a front dielectric layer 215 on the front substrate 211, such that the plurality of pairs of sustain electrodes 214 are between the front dielectric layer 215 and the front substrate 211, and a protective layer 216. The front substrate 211 has high light transmittance.

The rear panel 220 includse a transparent rear substrate 221, e.g., a glass substrate, in parallel to the front substrate 211, a plurality of address electrodes 222 positioned on a front surface 221 a of the rear substrate 221 and perpendicularly to the plurality of pairs of sustain electrodes 214, a rear dielectric layer 223 covering the address electrodes 222, and a plurality of barrier ribs 224 positioned on the rear dielectric layer 223 and defining the plurality of emission cells 226.

The address electrodes 222 of the rear panel 220 are formed of a metal having high electrical conductivity, e.g., aluminum (Al). The address electrodes 222 are used with a sustain electrode 212 to generate an address discharge. The address discharge is a discharge employed to select emission cells 226 to be activated, i.e., emit light, by a sustain discharge, as will be described in detail below.

The rear dielectric layer 223 of the rear panel 220 is on the address electrodes 222 to minimize collision between the address electrodes 222 and charged particles generated during the address discharge. The rear dielectric layer 223 is formed of a dielectric material capable of inducing discharged particles, e.g., lead oxide (PbO), bismuth oxide (B₂O₃), silicon oxide (SiO₂), and so forth.

The barrier ribs 224 of the rear panel 220 are positioned to define the emission cells 226 therebetween. Accordingly, the barrier ribs 224 are interposed in a discharge space between the front substrate 211 and the rear substrate 221. The barrier ribs 224 minimize contact between adjacent emission cells 226 and enlarge a surface area of phosphor layers 225 applied inside the emission cells 226. The barrier ribs 224 are formed of glass including any suitable property enhancing material, e.g., lead (Pb), boron (B), silicon (Si), aluminum (Al), or oxygen (O), a filler, e.g., zirconium oxide (ZrO₂), titanium oxide (TiO₂), or aluminum oxide (Al₂O₃), and/or a pigment, e.g., chromium (Cr), copper (Cu), cobalt (Co), iron (Fe), or titanium oxide (TiO₂).

The pairs of sustain electrodes 214 of the front panel 210 extend along the emission cells 226 and perpendicularly to the address electrodes 222. The pairs of sustain electrodes 214 include first, i.e., Y electrodes, and second, i.e., X electrodes, sustain electrodes 212 and 213 at equal intervals, so that each second sustain electrode 213 is positioned between two first sustain electrodes 212 and parallel thereto. Application of voltage to the first and second electrodes 212 and 213 generates a potential difference therebetween and, thereby, triggers a sustain discharge.

The first and second electrodes 212 and 213 include first and second transparent electrodes 212b and 213b, respectively, and first and second bus electrodes 212a and 213a, respectively. The first and second bus electrodes 212a and 213a may be used without the first and second transparent electrodes 212b and 213b, respectively, to form a scanning electrode and a common electrode.

The first and second transparent electrodes 213b and 212b are formed of a transparent conductive material, e.g., indium tin oxide (ITO), so that light emitted from the phosphor can be transmitted towards the front substrate 211 without being blocked. However, formation of the first and second transparent electrodes 213b and 212b of a transparent conductive material, such as ITO, may impart high resistance thereto, thereby triggering a large voltage drop in a lengthwise direction of the transparent electrodes 213b and 212b, an increase in power consumption of the PDP, and a decrease in a response speed of images. Accordingly, the first and second bus electrodes 212a and 213a may be formed of a highly conductive metal, e.g., silver (Ag), on outer edges of the first and second transparent electrodes 212b and 213b, respectively.

The front dielectric layer 215 of the front panel 210 are disposed on the pairs of sustain electrodes 214 to prevent a direct electrical connection between the first and second electrodes 212 and 213, and to prevent collisions between charged particles with the sustain electrodes 214 during the sustain discharge. The front dielectric layer 215 is formed of a dielectric material with a high light transmittance, e.g., lead oxide (PbO), bismuth oxide (B₂O₃), silicon oxide (SiO₂), and so forth.

The protective layer 216 of the front panel 210 is formed on the front dielectric layer 215. The protective layer 216 shields the front dielectric layer 215 from electron collisions and secondary electrons during the sustain discharge. The protective layer 216 is formed of magnesium oxide (MgO).

The emission cells 226 of the PDP is filled with a discharge gas, e.g., neon (Ne), xenon (Xe), or a mixture thereof. For example, if a gaseous mixture of neon and xenon is used, the xenon gas may be used in an amount of about 5%-10% of the gaseous mixture. Additionally, a portion of the neon gas may be replaced with a helium (He) gas.

The decay time of the PDP according to an embodiment of the present invention is less than about 1 ms, and preferably in a range of about 400 µs to about 1 ms. The color temperature of the PDP is about 8500 K, and the PDP exhibits white color coordinate of (x=0.285, y=0.300) based on a CIE (Commission International de l'Eclairage) color system.

The present invention will be described in further detail with reference to the following examples. These examples are for illustrative purposes only and are not intended to limit the scope of the present invention.

### EXAMPLES:

Comparative Example 1: zinc (Zn), silicon (Si), and manganese (Mn) in a mole ratio of 2:1:0.11 were mixed and ground to form a phosphor mixture. The phosphor mixture was placed in a crucible and thermally treated at 1550 °C in an electric furnace for 5 hours at air atmosphere. The thermally treated phosphor mixture was further thermally treated at 1,200 °C for 10 hours at an atmosphere of 5% of H₂ and 95% of N₂ to form a Zn₂SiO₄:Mn phosphor.

Subsequently, 0.05 parts by weight of aluminum oxide (Al₂O₃) was adsorbed to a surface of 100 parts by weight of the Zn₂SiO₄:Mn phosphor by ion adsorption method to form a Zn₂SiO₄:Mn phosphor with an amorphous layer with an average particle diameter of 3.0 µm and an average amorphous oxide layer thickness of about 2-5 nm.

Next, 40 wt% of the Zn₂SiO₄:Mn phosphor with an amorphous layer, 8 wt% of ethyl cellulose, and 52 wt% of terpineol were mixed to form a phosphor layer composition.

The phosphor layer composition was screen printed onto emission cells of a PDP, dried, and sintered at 480 °C to form a green phosphor layer. The PDP included a discharge gas having a mixture of 93 wt% of Ne and 7 wt% of Xe.

Example 1: The green phosphor layer was prepared in the same manner as the green phosphor layer of Comparative Example 1, with the exception that the Zn₂SiO₄:Mn phosphor was formed with 0.05 parts by weight of lanthanum oxide (La₂O₃), as opposed to aluminum oxide (Al₂O₃).

Comparative Example 2: The green phosphor layer was prepared in the same manner as the green phosphor layer of Comparative Example 1, with the exception that the Zn₂SiO₄:Mn phosphor was formed with 0.5 parts by weight of yttrium oxide (Y₂O₃), as opposed to aluminum oxide (Al₂O₃).

Comparative Example 3: The green phosphor layer was prepared in the same manner as the green phosphor layer of Comparative Example 1, with the exception that the Zn₂SiO₄:Mn phosphor was formed with 0-03 parts by weight of aluminum oxide (Al₂O₃), as opposed to 0.05 parts by weight of aluminum oxide (Al₂O₃).

Comparative Example 4: The green phosphor layer was prepared in the same manner as the green phosphor layer of Comparative Example 1, with the exception that the Zn₂SiO₄:Mn phosphor was formed with 0.3 parts by weight of yttrium oxide (Y₂O₃), as opposed to aluminum oxide (Al₂O₃).

Example 2: The green phosphor layer was prepared in the same manner as the green phosphor layer of Comparative Example 1, with the exception that the Zn₂SiO₄:Mn phosphor was formed with 0.1 parts by weight of lanthanum oxide (La₂O₃), as opposed to aluminum oxide (Al₂O₃).

Comparative Example 5: The green phosphor layer was prepared in the same manner as the green phosphor layer of Comparative Example 1, with the exception that the Zn₂SiO₄:Mn phosphor was formed with 1 part by weight of yttrium oxide (Y₂O₃), as opposed to aluminum oxide (Al₂O₃).

Comparative Example 6: The green phosphor layer was prepared in the same manner as the green phosphor layer of Comparative Example 1, with the exception that an amorphous oxide layer, i.e., aluminum oxide (Al₂O₃), was not adsorbed to the Zn₂SiO₄:Mn phosphor.

Comparative Example 7: The green phosphor layer was prepared in the same manner as the green phosphor layer of Comparative Example 1, with the exception that the Zn₂SiO₄:Mn phosphor was formed with 0.005 parts by weight of aluminum oxide (Al₂O₃), as opposed to 0.05 parts by weight of aluminum oxide (Al₂O₃).

Comparative Example 8: The green phosphor layer was prepared in the same manner as the green phosphor layer of Comparative Example 7, with the exception that the Zn₂SiO₄:Mn phosphor was formed with 0.005 parts by weight of lanthanum oxide (La₂O₃), as opposed to 0-005 parts by weight of aluminum oxide (Al₂O₃).

Comparative Example 9: The green phosphor layer was prepared in the same manner as the green phosphor layer of Comparative Example 7, with the exception that the Zn₂SiO₄:Mn phosphor was formed with 0.005 parts by weight of yttrium oxide (Y₂O₃), as opposed to 0.005 parts by weight of aluminum oxide (Al₂O₃).

All green phosphor layers obtained in Examples 1-2 and Comparative Examples 1-9 were tested to determine a zeta potential and a relative luminance. A thickness of each amorphous oxide layer in Examples 1-2 was determined from Transmission Electron Microscopy (TEM) images.

A zeta potential was determined as follows. Each of the phosphor layers prepared in Example 1-2 and Comparative Examples 1-9 was dispersed in pure water (pH: 5.8) and subjected to ultrasonic waves for about 2 minutes. Next, each sample was loaded into a Zetamaster device (MALVERN Co.) to measure a zeta potential. The zeta potential of each sample was measured five times and an average seta potential was calculated and reported.

A relative luminance of each sample was measured using CA100 CRT color analyzer (MINOLTA Co.).

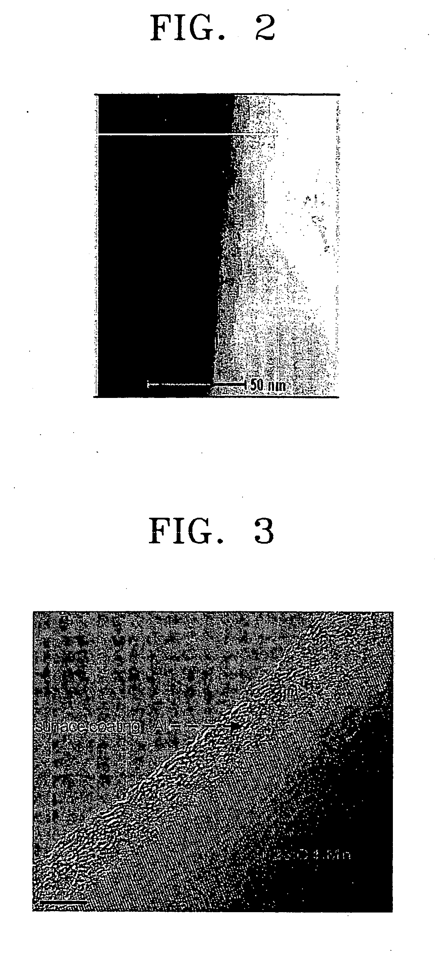

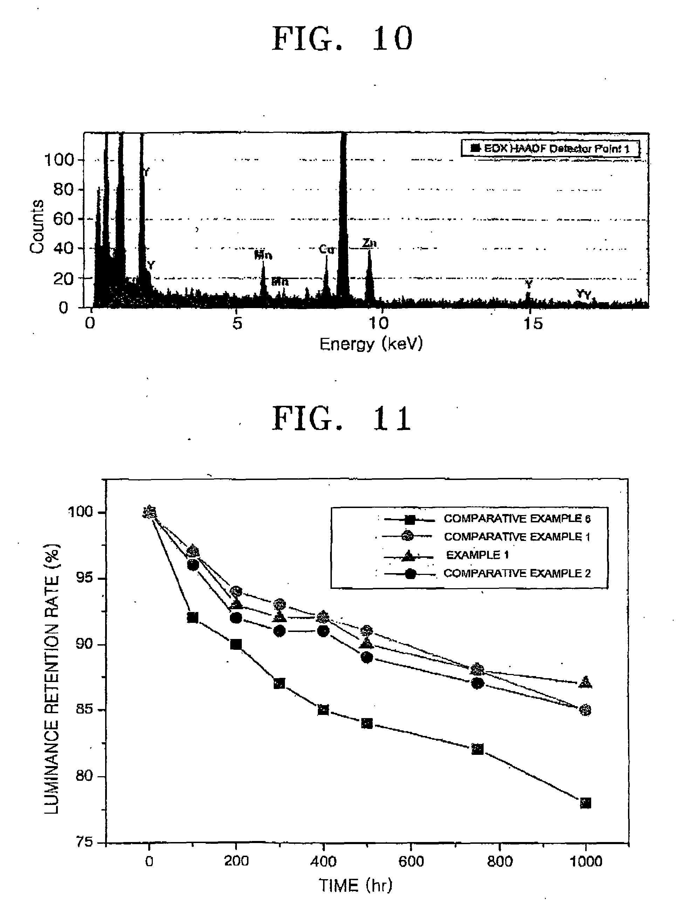

The green phosphor layers obtained in Examples 1-2 are illustrated in FIGS. 2-10, and the test results of the zeta potential and the relative luminance of the green phosphor layers obtained in Examples 1-2 and Comparative Examples 1-9 are reported in Table 1 and illustrated in FIG. 11 below. The thickness of the amorphous oxide layer of each of the phosphors formed in Examples 1-2 is reported in Table 1 as well.

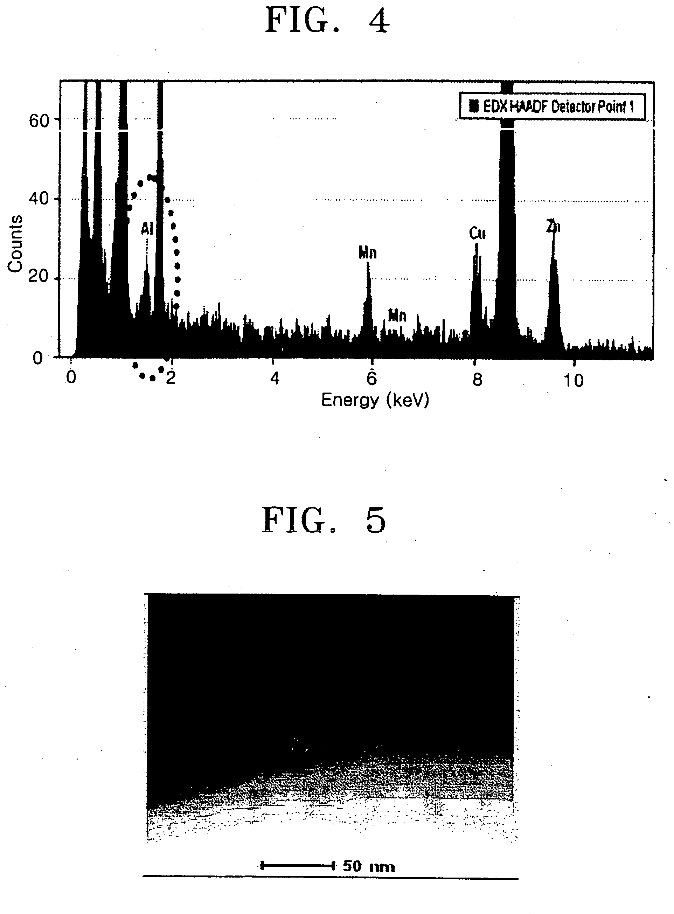

FIGS. 2-3 illustrate Transmission Electron Microscopy (TEM) images of an aluminum oxide coating on a surface of the green phosphor layers prepared according to Comparative Examples 1 and 3. FIG. 3 is an enlarged image of FIG. 2. FIG. 4 illustrates a graph of the energy dispersive spectroscope (EDS) data of the green phosphor layers in Comparative Examples 1 and 3.

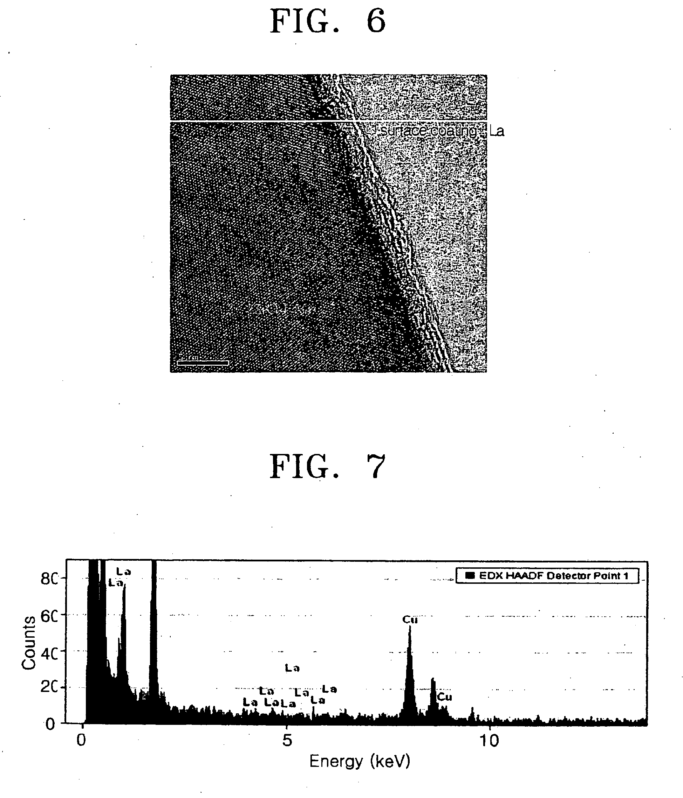

FIGS. 5-6 illustrate TEM images of a lanthanum oxide coating on a surface of the green phosphor layers prepared according to Examples 1 and 2. FIG. 6 is an enlarged image of FIG. 5. FIG. 7 illustrates a graph of the EDS data of the green phosphor layers in Comparative Examples 1 and Example 2.

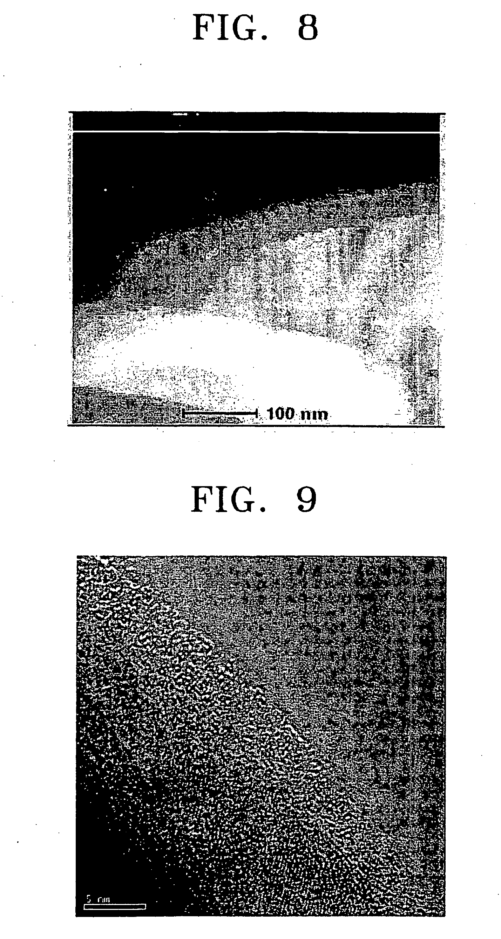

FIGS. 8-9 illustrate TEM images of a yttrium coating on a surface of the green phosphor layers prepared according to Comparative Examples 2, 4 and 5. FIG. 9 is an enlarged image of FIG. 8. FIG. 10 illustrates a graph of the EDS data of the green phosphor layers in Comparative Examples 2, 4 and 5.

**Table 1**

| | Zeta Potential (mV) | Relative Luminance | Thickness of amorphous layer (nm) |
|---|---|---|---|
| Comparative Example 1 | +43 | 100 | 5 |
| Example 1 | +10 | 100 | 3 |
| Comparative Example 2 | +35 | 99 | 4 |
| Compatative Example 3 | +20 | 98 | 5 |
| Comparative Example 4 | +25 | 98 | 4 |
| Example 2 | +20 | 98 | 7 |
| Comparative Example 5 | +35 | 95 | 12 |
| Comparative Example 6 | -35 | 100 | --- |
| Comparative Example 7 | -5 | 100 | --- |
| Comparative Example 8 | -30 | 100 | --- |
| Comparative Example 9 | -5 | 100 | --- |

As can be seen in Table 1, the green phosphor layers prepared according to Examples 1-2 exhibit positive zeta potential values, while the green phosphor layers prepared according to Comparative Examples 6-9 exhibit negative zeta potential values. Accordingly, green phosphor layers prepared according to an embodiment of the present invention, e.g., Examples 1-2, may provide improved brightness, minimized permanent afterimage, and increased lifespan.

Additionally, as can be seen in FIG. 11 illustrating luminance with respect to time, green phosphor layers prepared according to an embodiment of the present invention, e.g., Example 1, may retain luminance for longer periods as compared to green phosphor layers prepared according to conventional methods, i.e., Comparative Example 6. For example, after a period of 1000 hours, the green phosphor layers prepared according to an embodiment of the present invention exhibit a relative luminance rate of at least 10% higher as compared to a relative luminance of green phosphor layers prepared according to conventional methods.

Accordingly, a PDP including green phosphor layers prepared according to an embodiment of the present invention may exhibit enhanced and uniform luminance, in addition to improved overall life span of the PDP. In particular, the green phosphor layers according to an embodiment of the present invention may include an amorphous oxide layer to improve discharge and luminous properties and to minimize deterioration of the phosphor due to ion bombardments.

By using the phosphor with the amorphous layer prepared according to an embodiment of the present invention, surface charge properties of the green phosphor layer in a PDP may be improved and, thereby, the panel discharge voltage may be controlled to provide uniform luminance levels of red and green lights, i.e., minimize or eliminate low gray-level and low discharge problems. Additionally, the amorphous oxide layer adsorbed to the core phosphor may shield the resultant phosphor with the amorphous layer and, thereby, minimize deterioration of the phosphor with the amorphous layer due to ion bombardment. Minimized phosphor deterioration may provide a PDP with a high luminance retention rate and, therefore, enhanced lifespan. In particular, a permanent afterimage initiation time of a PDP may be extended.

Embodiments of the present invention have been disclosed herein, and although specific terms are employed, they are used and are to be interpreted in a generic and descriptive sense only and not for purpose of limitation. Accordingly, it will be understood by those of ordinary skill in the art that various changes in form and details may be made without departing from the scope of the present invention as set forth in the following claims.

## Claims

1. A phosphor with an amorphous layer, comprising:
a core phosphor; and
an amorphous layer adsorbed to the core phosphor, the amorphous layer including a metal oxide and having a thickness in a range of from about 1 nm to about 30 nm,
wherein the phosphor with the amorphous layer exhibits a zeta potential of about 10 mV to about 50 mV, and the metal oxide is a lanthanum oxide (La₂O₃).

2. A phosphor with an amorphous layer as claimed in claim 1, wherein the core phosphor is Mn-activated zinc silicate, CaMgSi₂O₆:Eu, (Y,Gd)VPO₄:Eu, (Y,Gd)BO₃:Eu, Y₂O₃:Eu, (Y,Gd)₂O₃:Eu, (Ba,Mg,Sr)Al₁₂O₁₉:Mn, or BaAl₁₂O₁₉:Mn.

3. A phosphor with an amorphous layer as claimed in claim 2, wherein the Mn-activated zinc silicate is represented by Zn₂SiO₄:Mn.

4. A phosphor with an amorphous layer as claimed in any preceding claim, wherein the amount of metal oxide in the phosphor with the amorphous layer is about 0.01 to about 10 parts by weight based on 100 parts by weight of the core phosphor.

5. A phosphor with an amorphous layer as claimed in any preceding claim, wherein an average particle diameter of the phosphor with the amorphous layer is in a range of from about 1 µm to about 10 µm.

6. A method of forming a phosphor with an amorphous layer, comprising:
synthesizing a Mn-activated zinc silicate represented by Zn₂SiO₄:Mn; and
adsorbing a precursor of lanthanum oxide (La₂O₃) to a surface of the Mn-activated zinc silicate by an ion adsorption; and
performing heat treatment in the presence of a hydrogen gas (H₂), a nitrogen gas (N₂), or a mixture thereof to form a phosphor with an amorphous oxide layer of lanthanum oxide (La₂O₃) having a thickness in a range of from about 1 nm to about 30 nm, wherein a zeta potential of the phosphor with the amorphous oxide layer is in a range of from about 10 mV to about 50 mV.

7. A plasma display panel (PDP), comprising:
a front panel in parallel to a rear panel;
a plurality of electrodes arranged between the front and rear panels;
a plurality of emission cells arranged between the electrodes; and
a phosphor with an amorphous layer according to any one of claims 1 to 5.

## Patentansprüche

1. Phosphor mit einer amorphen Schicht, umfassend:
einen als Kern dienenden Phosphor und
eine amorphe Schicht, die an den als Kern dienenden Phosphor adsorbiert ist, wobei die amorphe Schicht ein Metalloxid umfasst und eine Dicke im Bereich von etwa 1 nm bis etwa 30 nm aufweiset,
wobei der Phosphor mit der amorphen Schicht ein Zetapotential von etwa 10 mV bis etwa 50 mV aufweist und die Metalloxidschicht ein Lanthanoxid (La₂O₃) ist.

2. Phosphor mit einer amorphen Schicht nach Anspruch 1, wobei der als Kern dienende Phosphor Mn-aktiviertes Zinksilicat, CaMgSi₂O₆:Eu, (Y,Gd)VPO₄:En, (X,Gd)BO₃:Eu, Y₂O₃:Eu, (Y,Gd)₂O₃:Eu, (Ba,Mg,Sr)Al₁₂O₁₉:Mn oder BaAl₁₂O₁₉:Mn ist.

3. Phosphor mit einer amorphen Schicht nach Anspruch 2, wobei das Mn-aktivierte Zinksilicat durch Zn₂SiO₄:Mn dargestellt ist.

4. Phosphor mit einer amorphen Schicht nach einem der vorhergehenden Ansprüche, wobei die Menge an Metalloxid in dem Phosphor mit der amorphen Schicht etwa 0,01 bis etwa 10 Gewichtsteile, auf 100 Gewichtsteile des den Kern bildenden Phosphors bezogen, beträgt.

5. Phosphor mit einer amorphen Schicht nach einem der vorhergehenden Ansprüche, wobei ein durchschnittlicher Teilchendurchmesser des Phosphors mit der amorphen Schicht im Bereich von etwa 1 µm bis etwa 10 µm liegt.

6. Verfahren zum Bilden eines Phosphors mit einer amorphen Schicht, umfassend:
das Synthetisieren eines Mu-aktivierten Zinksilicats, das durch Zn₂SiO₄:Mn dargestellt ist; und
das Adsorbieren eines Vorläufers von Lanthanoxid (La₂O₃) an eine Oberfläche des Mn-aktivierten Zinksilicats durch eine Ionenadsorption; und
das Durchführen einer Hitzebehandlung in Gegenwart eines Wasserstoffgases (Hz), eines Stickstoffgases (N₂) oder einer Mischung davon unter Bildung eines Phosphors mit einer amorphen Oxidschicht von Lantanoxid (La₂O₃), die eine Dicke im Bereich con etwa 1 nm bis etwa 30 nm aufweist, wobei ein Zetapotential des Phosphors mit der amorphen Oxidschicht im Bereich von etwa 10 mm bis etwa 50 mV liegt,

7. Plasmaanzeigetafel (PDP) umfassend:
eine vordere Tafel parallel zu einer hinteren Tafel;
mehrere Elektroden, die zwischen der vorderen und hinteren Tafel angeordnet sind;
mehrere Emissionszellen, die zwischen den Elektroden angeordnet sind; und
einen Phosphor mit einer amorphen Schicht nach einem der Absprüche 1 bis 5.

## Revendications

1. Phosphore avec couche amorphe, comprenant:
un phosphore central; et
une couche amorphe adsorbée sur le phosphore central, la couche amorphe comprenant un oxyde métallique et ayant une épaisseur comprise entre environ 1 nm et environ 30 nm,
dans lequel le phosphore avec la couche amorphe présente un potentiel zêta d'environ 10 mV à environ 50 mV, et l'oxyde métallique est un oxyde de lanthane (La₂O₃).

2. Phosphore avec couche amorphe selon la revendication 1, dans lequel le phosphore central est un silicate de zinc activé par Mn, CaMgSi₂O₆:Eu_{;} (Y,Gd)VPO₄:Eu, (Y,Gd)BO₃:Eu, Y₂O₃:Eu, (Y,Gd)₂O₃:Eu, (Ba,Mg,Sr)Al₁₂O₁₉:Mn, ou BaAl₁₂O₁₉:Mn.

3. Phosphore avec couche amorphe selon la revendication 2, dans lequel le silicate de zinc activé par Mn est représenté par Zn₂SiO₄:Mn.

4. Phosphore avec couche amorphe selon l'une quelconque des revendications précédentes, dans lequel la quantité d'oxyde métallique dans le phosphore avec la couche amorphe est d'environ 0,01 à environ 10 parties en poids pour 100 parties en poids du phosphore central.

5. Phosphore avec couche amorphe selon l'une quelconque des revendications précédentes, dans lequel un diamètre particulaire moyen du phosphore avec la couche amorphe est compris entre environ 1 µm et environ 10 µm.

6. Procédé de formation d'un phosphore avec couche amorphe, comprenant:
la synthèse d'un silicate de zinc activé par Mn représenté par Zn₂SiO₄:Mn; et
l'adsorption d'un précurseur d'oxyde de lanthane (La₂O₃) sur une surface du silicate de zinc activé par Mn, par adsorption d'ions; et
l'exécution d'un traitement thermique en présence d'hydrogène gazeux (H₂), d'azote gazeux (N₂), ou d'un mélange de ceux-ci pour former un phosphore avec une couche d'oxyde amorphe composée d'oxyde de lanthane (La₂O₂) ayant une épaisseur comprise entre environ 1 nm et environ 30 nm, où un potentiel zêta du phosphore avec la couche d'oxyde amorphe est compris entre environ 10 mV et environ 50 mV.

7. Panneau d'affichage à plasma (PDP), comprenant:
un panneau avant monté parallèlement à un panneau arrière;
une pluralité d'électrodes disposées entre les panneaux avant et arrière;
une pluralité de cellules émissives disposées entre les électrodes; et
un phosphore avec couche amorphe selon l'une quelconque des revendications 1 à 5.
